# EUROPEAN PATENT APPLICATION

(11) **EP 1 037 152 A2**
(43) Date of publication of application: **20.09.2000**
(21) Application number: 00105472.5
(22) Date of filing: 15.03.2000
(51) Int. Cl.: G06F 17/22

(54) **Method for converting mheg documents to html documents**

(30) Priority: 16.03.1999 JP 7043499; 16.06.1999 JP 16986999
(71) Applicant: NEC Corporation, Minato-ku, Tokyo 108-01 (JP)
(72) Inventor: Hatayama, Akemi, Minato-ku, Tokyo (JP)
(74) Representative: von Samson-Himmelstjerna, Friedrich R., Dipl.-Phys.

(57) **Abstract**

A method for converting an MHEG(Multimedia and Hypermedia Expert Group) document to an HTML(Hypertext Mark-up Language) document according to the present invention allows an MHEG object, which has no corresponding representation in an HTML document, to be represented in some other representation in the HTML document. The method for converting the MHEG document to the HTML document comprises the steps of converting at least a part of properties of a first MHEG object in an MHEG document to one or more object properties in an HTML document; converting at least a part of properties, other than the properties converted to the properties in the HTML document, to variables coded in a script in the HTML document; converting an event type of a link object having a second MHEG object as an event source to an event handler associated with an object in the HTML document, the object in the HTML document corresponding to the event source in the link object; and converting a link effect of the link object having the second MHEG object as the event source to a method or a combination of methods associated with the event handler and coded in the script. The first MHEG object and the second MHEG object are the same or different.

## Description

### BACKGROUND OF THE INVENTION

The present invention relates to a method for converting a Multimedia and Hypermedia Expert Group (MHEG) document to a Hypertext Mark-up Language (HTML) document. More particularly, the present invention relates to a method for converting an MHEG document, including MHEG objects not directly convertible to objects in an HTML document, to an HTML document.

Today, as the digital broadcasting service has begun, the data broadcasting service has also begun. The Digital Audio-Visual Council (DAVIC) has adopted MHEG-5 as the data broadcasting coding method or as the high-level Application Programming Interface (API) standard for a set-top unit. MHEG, a standard for interchanging the representation of multimedia data objects or hypermedia data objects, has been adopted as the standard by International Organization for Standardization/International Electrotechnical Commission (ISO/IEC) and International Telecommunication Union (ITU). An MHEG model is coded as an object (an MHEG object, also called an "ingredient") which is an instance generated from a class (also called an ingredient class). The source of an MHEG document, written in Abstract Syntax Notation version 1 (ASN1) that is an ISO standard, is converted to binary code.

On the other hand, HTML 4.0 has become the standard of the Web page description language.

So far, it has been assumed that MHEG documents and HTML documents are used separately. However, as the representation capabilities of WWW (World Wide Web) pages have improved, a need has arisen to use the contents of both documents interchangeably.

However, when an MHEG-5 document is converted to the representation of a combination of HTML 4.0, CSS (Cascading Style Sheet), and JavaScript, some MHEG objects cannot be converted. This is because those MHEG objects do not have parts corresponding to those composed of a combination of HTML 4.0, CSS, and JavaScript.

### SUMMARY OF THE INVENTION

It is an object of the present invention to provide a method for converting an MHEG document, including MHEG objects with no description compatible with an HTML document, to an HTML document.

It is another object of the present invention to provide a method for converting an MHEG document, including MHEG objects not convertible as parts, to an HTML document.

It is still another object of the present invention to provide a method for converting an MHEG document to an HTML document that can convert a slider object not convertible as a part.

The method for converting an MHEG document to an HTML document according to the present invention is a method, wherein the MHEG document having one or more MHEG objects is converted to the HTML document having one or more object descriptions, CSS descriptions, and scripts.

In addition, the method for converting an MHEG document to an HTML document according to the present invention comprises the steps of converting at least a part of properties of a first MHEG object in an MHEG document to one or more object properties in an HTML document; converting at least a part of properties, other than the properties converted to the properties in the HTML document, to variables coded in a script in the HTML document; converting an event type of a link object having a second MHEG object as an event source to an event handler associated with an object in the HTML document, the object in the HTML document corresponding to the event source in the link object; and converting a link effect of the link object having the second MHEG object as the event source to a method or a combination of methods associated with the event handler and coded in the script.

### BRIEF DESCRIPTION OF THE DRAWINGS

Other features and advantages of the invention will be made more apparent by the following detailed description and the accompanying drawings, wherein:
FIG. 1 is a conceptual diagram showing a method for converting objects using a document conversion method according to the present invention;
FIG. 2 is a diagram showing the shape of a slider used in a first embodiment of the present invention;
FIG. 3 is a diagram showing a slider attribute conversion table used in the first embodiment of the present invention;
FIG. 4A through 4C are diagrams showing the types of the slider used in the first embodiment of the present invention;
FIG. 5A and 5B are diagrams showing an MHEG-5 coded slider object and an HTML 4.0 set coded slider object converted in the first embodiment of the present invention, respectively;
FIG. 6 is a diagram showing an action conversion table used in the first embodiment of the present invention;
FIG. 7A through 7F are diagrams showing JavaScript coded variables and scripts generated by the method in the first embodiment of the present invention;
FIG. 8 is a diagram showing an example of an MHEG-5 document to which the method in the first embodiment of the present invention is to be applied;
FIGS. 9A through 9F are diagrams showing an HTML 4.0 set document generated by converting the MHEG-5 document shown in FIG. 9 by the method in the first embodiment of the present invention;
FIGS. 10A through 10F are diagrams showing an MHEG object property conversion table used in a second embodiment of the present invention;
FIGS. 11A through 11C are diagrams showing an MHEG action conversion table used in the second embodiment of the present invention;
FIGS. 12 is a diagram showing an MHEG event conversion table used in the second embodiment of the present invention; and
FIG. 13 is a block diagram showing the devices used to implement the method in the embodiments of the present invention.

In the drawings, the same reference numerals represent the same structural elements.

### DETAILED DESCRIPTION OF THE PREFERRED EMBODIMENTS

A first embodiment of the present invention will be described in detail below.

The first embodiment of the present invention will be described with a slider object conversion method as an example.

The slider object conversion method in this embodiment converts a document coded in MHEG, a multimedia description language having a slider object, to a document coded in HTML, another multimedia description language not having a slider object. In this embodiment, a slider object coded in the conversion source language and the function of the slider object are implemented by a combination of another object coded in the conversion target language and the function of the object. This conversion method makes it possible for a slider object to work properly even when there is no slider object in the conversion target language.

In this embodiment, the slider object coded in MHEG-5 is converted to an object implemented by a combination of HTML 4.0, CSS, and JavaScript (hereafter called "HTML 4.0 set").

The configuration of the method in this embodiment will be described with reference to the attached drawings.

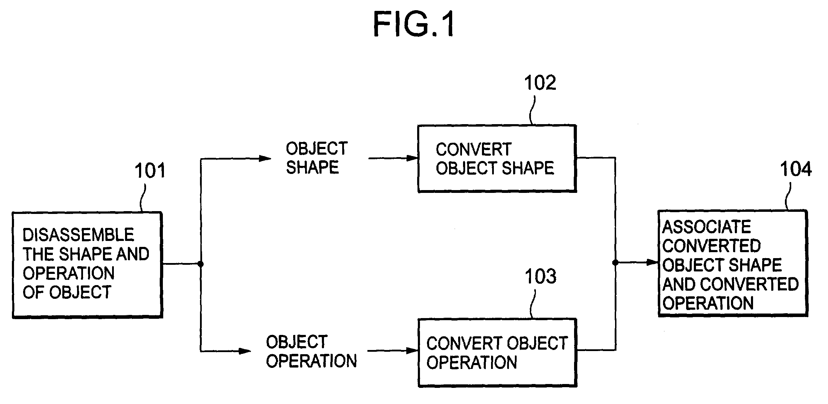

Referring to FIG. 1, the method in this embodiment comprises steps 101 to 104. In step 101, the shape and the operation of the slider object and the link objects having the action of the slider object are extracted from an MHEG-5 coded application and scenes and are disassembled. In step 102, the shape, one of slider object properties, is converted. That is, the shape of the slider object is converted to a plurality of object properties coded in HTML 4.0 set. In step 102, other properties of the slider object are also converted to variables coded in JavaScript of HTML 4.0 set. In step 103, the link effect of the slider object included in the link object is converted to a method or a combination of methods coded in JavaScript of HTML 4.0 set. In step 103, the event type of the link object is converted to the event handler of the object, in HTML 4.0 set, corresponding to the event source of the link object. In step 104, the shape and the operation generated in steps 102 and 103, represented in HTML 4.0 set, are associated. In step 104, a method or a combination of methods constitutes an event handler, coded in HTML 4.0 set, corresponding to the event type of the link object.

Next, the operation of the embodiment will be described.

In this embodiment, it is assumed that one application and one scene coded in MHEG-5 are converted to one file (page) coded in HTML 4.0 set.

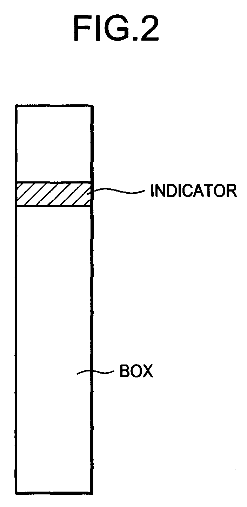

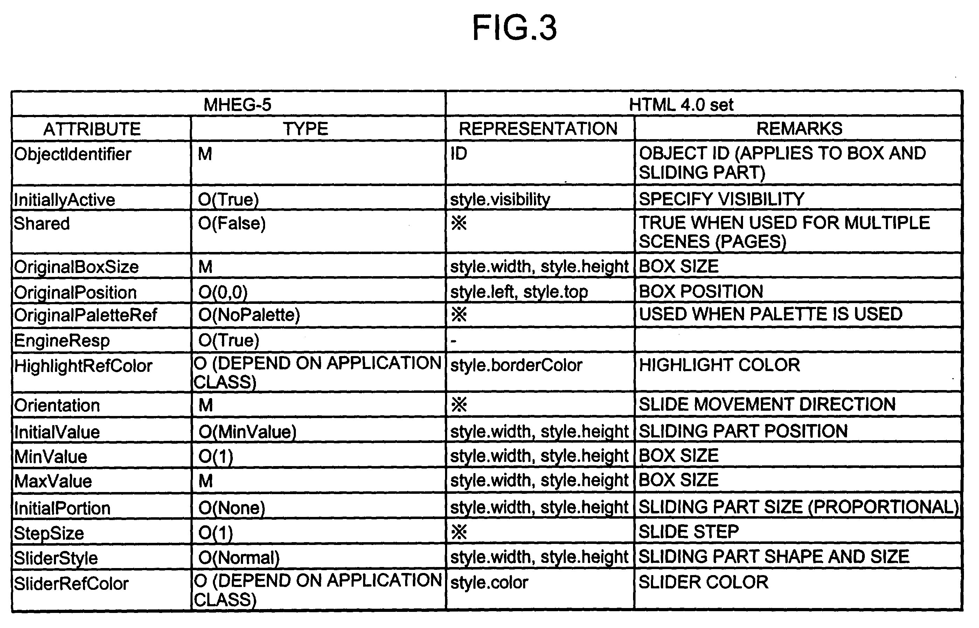

When the slider object is converted in the embodiment of the present invention, the slider object is thought of as a combination of two parts, an indicator and a box, as shown in FIG. 2. More specifically, each part is thought of as a rectangle and is represented by the DIV tag. Conversion from the attribute values coded in MHEG-5 to the attribute values in HTML 4.0 set is performed based on the rule shown in FIG. 3. The Attribute column in FIG. 3 contains all the attribute values available to the slider object coded in MHEG-5. M(Mandatory) in the Type column indicates that the attribute is mandatory, while O(option) indicates that the attribute is optional. The value in the parentheses immediately following O is the default value. The Representation column under HTML 4.0 Set contains a description used in the HTML 4.0 set for each attribute in MHEG-5. The description is represented as a property. This property, preceded by "style", is a style attribute used in CSS. The Remarks column contains the description of the function. The symbol "-" in the Representation column under HTML 4.0 Set indicates that the attribute is not used in HTML 4.0 set, and the symbol "*" indicates that the attribute cannot be converted directly.

Conversion of each attribute value will be described below in detail.

"Shared" is an attribute indicating whether or not the object is shared in all scenes of the MHEG-5 application. If "Shared" is "true", the two DIV tags corresponding to the slider object are coded in all HTML 4.0 set files corresponding to each scene.

OriginalPaletteRef is an attribute that must be coded when the color for the color attribute (HighlightRefColor, SliderRefColor) is specified by referring to the palette. If the color is specified without using the palette, for example, using a RGB color directly, this attribute is not necessary. The Orientation attribute specifies the orientation and direction of the slider. The available values include "up", "down", "left", and "right". The attribute indicates the direction from MinValue to MaxValue.

ObjectIdentifier is converted to an ID. When ObjectIdentifer=1000, the sliding part is converted to ID=1000s and the box part is converted to ID=1000o.

InitiallyActive indicates the default visibility. When this attribute is "true", style.visibility="visible"; when this attribute is "false", style.visibility="hidden".

OriginalBoxSize indicates the size of the box, and OriginalPosition indicates the top-left corner position. Therefore, they are converted to style.width, style.height and style.left, style.top, respectively.

HighlightRefColor and SliderRefColor indicate the highlight color and the slider color, respectively. They are specified either by referring to the palette or by specifying the color directly. When the color is specified by referring to the palette, it is converted to a direct specification color. In the HTML 4.0 set, the attribute specified by referring to the palette is converted to *.color=#00FFFF.

Minvalue and MaxValue indicate the both ends of a range specified by OrigBoxSize. At this time, the end corresponding to MinValue and the end corresponding to MaxValue are determined according to the direction specified by "Orientation".

InitialValue indicates the relative position of the slider in the initial state. This value satisfies the relation MinValue=< InitialValue =< MaxValue.

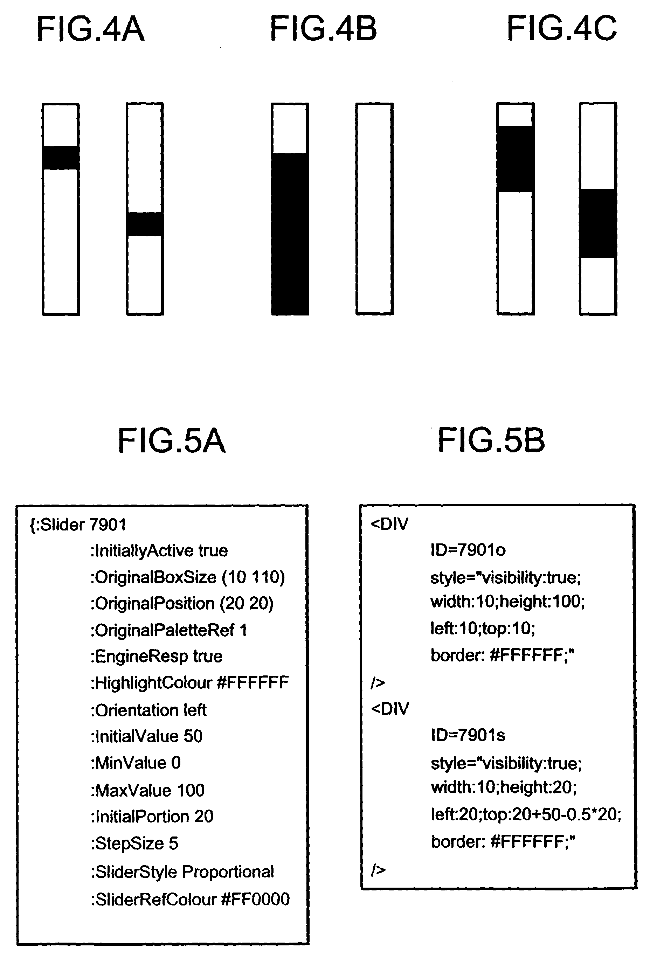

SliderStyle may take one of three values: Normal, Thermometer, and Proportional. An example of the outline of each style is shown: Normal style in FIG. 4A, Thermometer style in FIG. 4B, and Proportional style in FIG. 4C.

InitialPortion, which is effective only when Orientation=Proportional, specifies the size (width) of the sliding part.

The slider object shown in FIG. 5A is converted to HTML 4.0 set using these attributes. The result is shown in FIG. 5B.

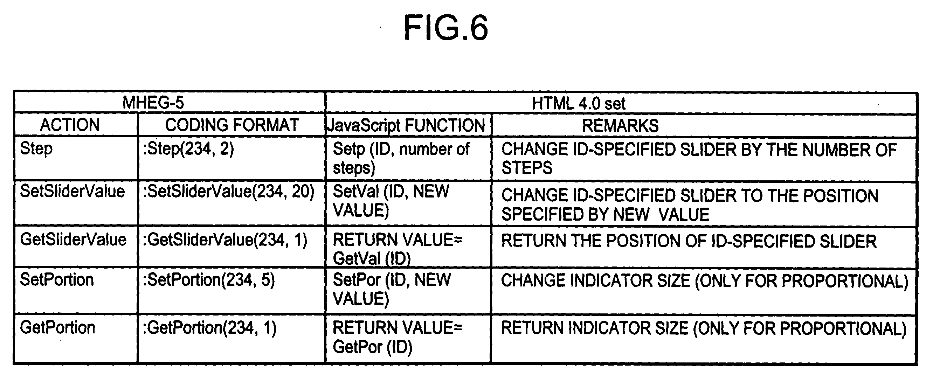

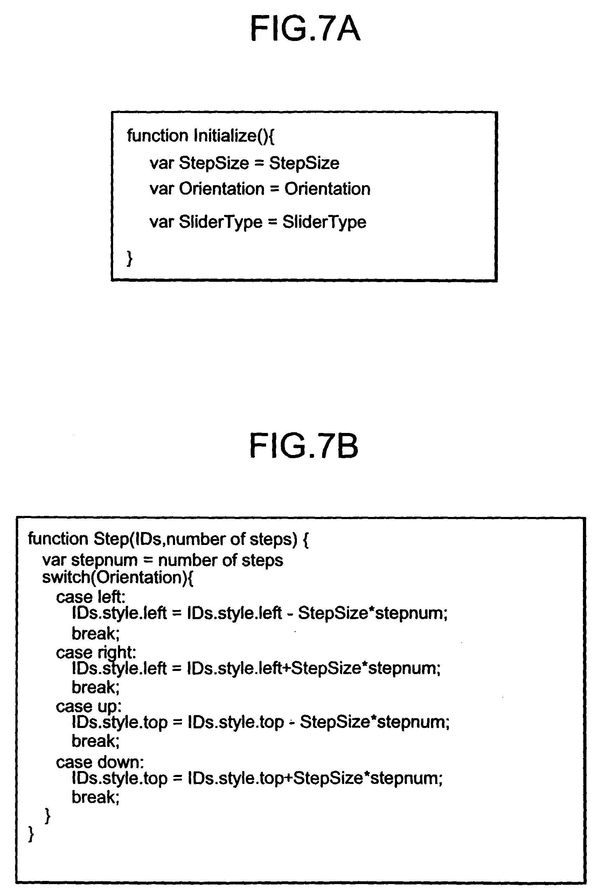

Next, the following describes the conversion method for actions, which are link effect elements of the slider object. FIG. 6 shows the coding format of each action in MHEG-5, the outline of arguments of functions that are used when those actions are converted to HTML 4.0 set (written in JavaScript), and the operation of each action. FIG. 7A through FIG. 7F show the detail of the functions coded in JavaScript. Note that the variables StepSize, Orientation, and SliderType used in the functions are set up, when a page is read, as JavaScript-coded variables as shown in FIG. 7A.

The functions will be detailed below.

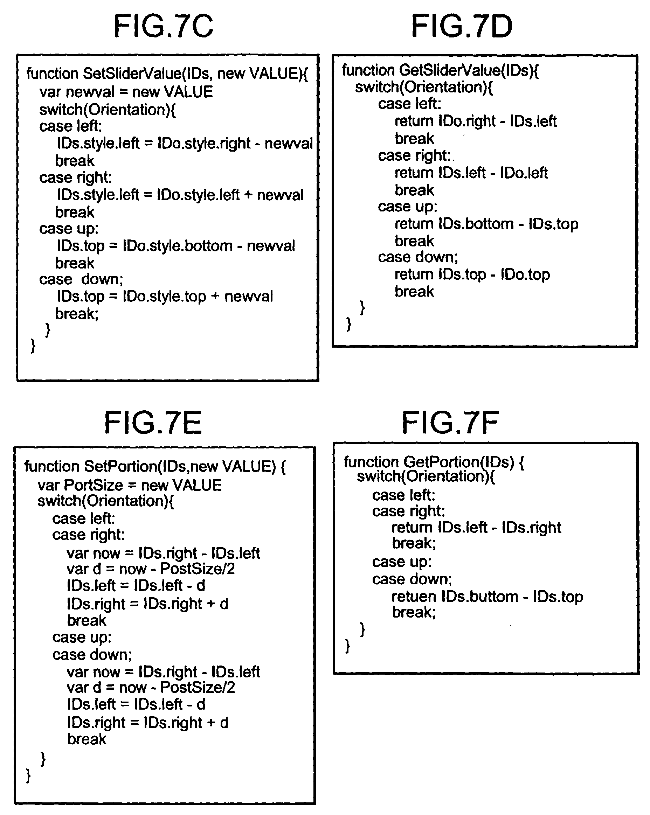

The variables defined by Initialize() in FIG. 7A are the values of MHEG-5 slider attributes corresponding to those that cannot be specified by "style" in HTML 4.0. Step (IDs, number of steps) in FIG. 7B changes the position of the DIV tag of the sliding part with ID=IDs by "number of steps". SetSlidervalue (IDs, new value) in FIG. 7C changes the position of the DIV tag corresponding to the sliding part with ID=IDs to the position corresponding to "new value". GetSlidervalue (IDs) in FIG. 7D returns the slider value from the position of the DIV tag corresponding to the sliding part with ID=IDs. SetPortion(IDs, new value) in FIG. 7E, which is effective only when SliderType=Proportional, changes the size of the display range for the direction in which the indicator corresponding to ID=IDs moves. GetPortion(IDs) in FIG. 7F, which is effective only when SliderType=Proportional, returns the size of the display range for the direction in which the indicator corresponding to ID=IDs moves.

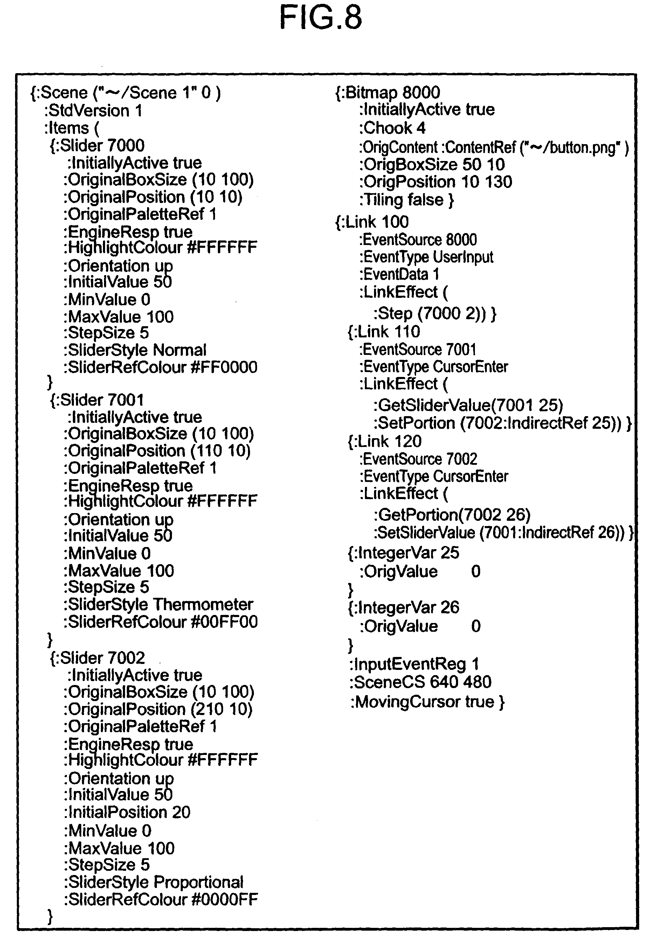

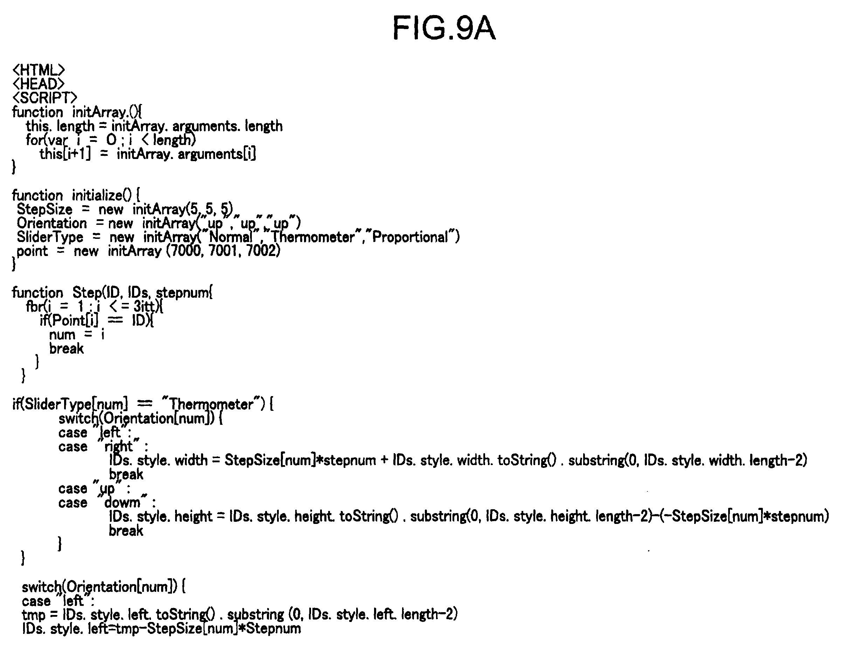

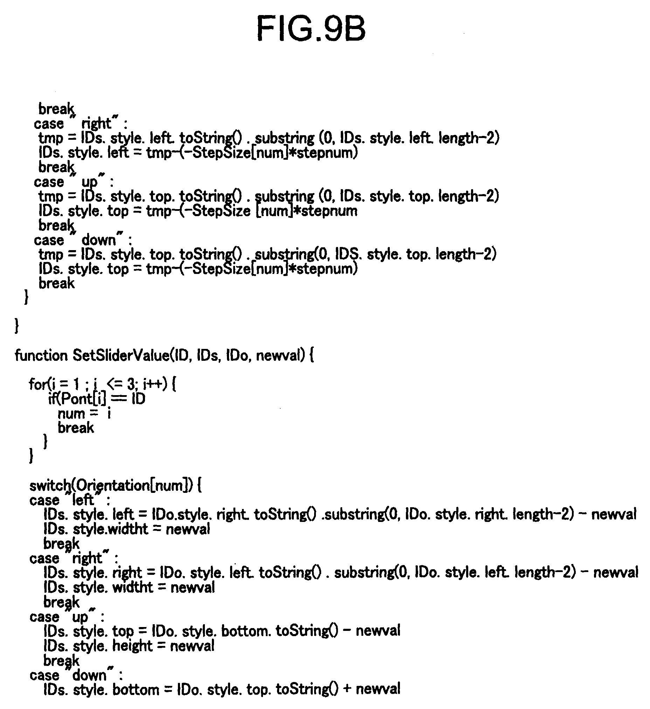

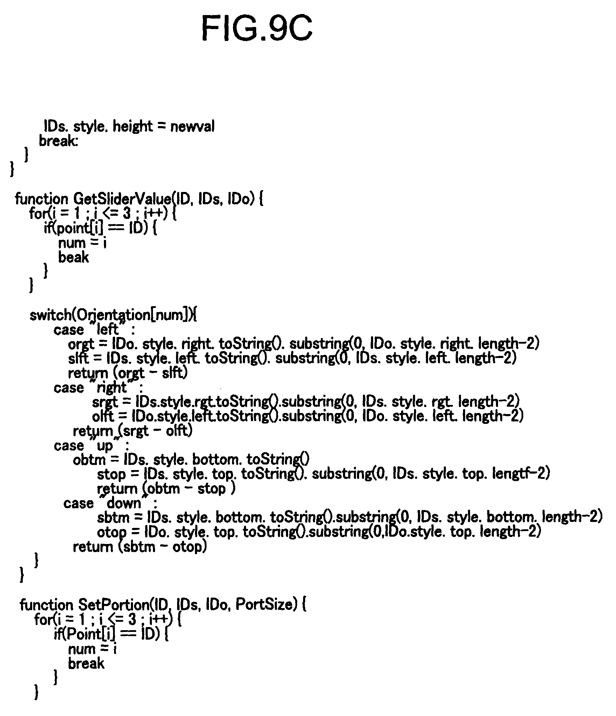

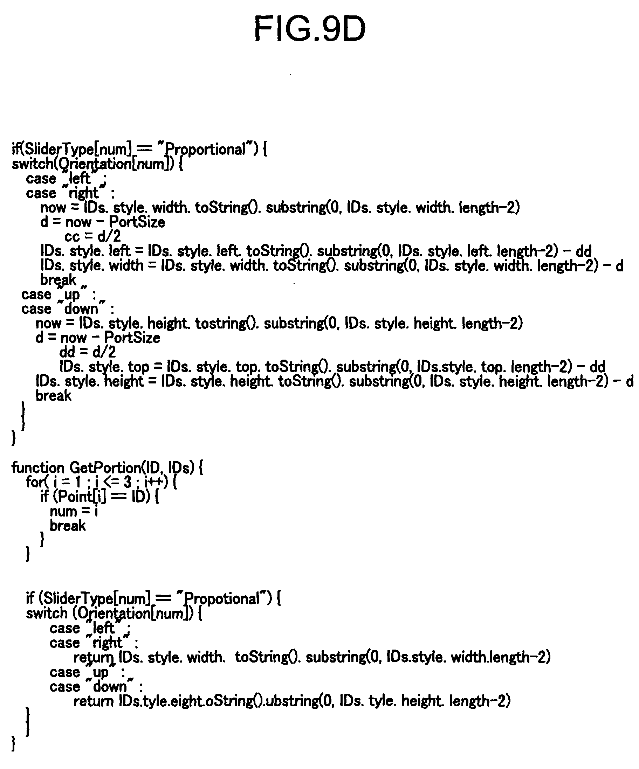

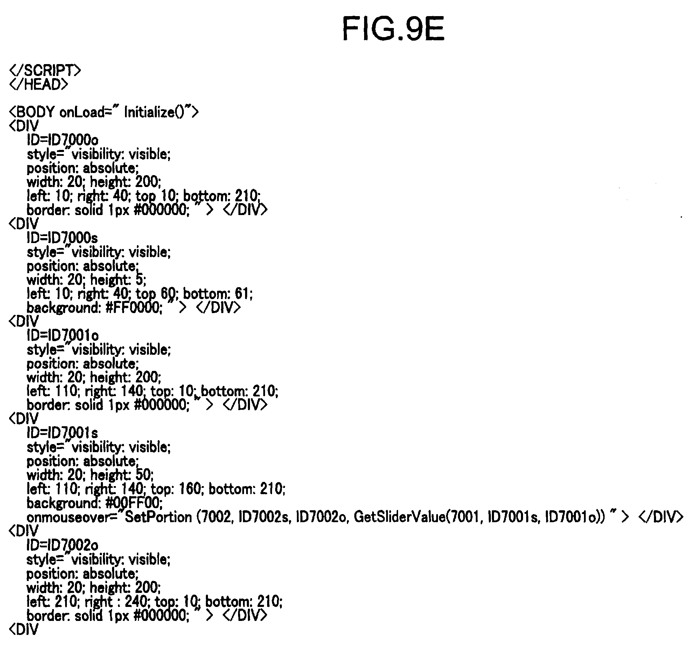

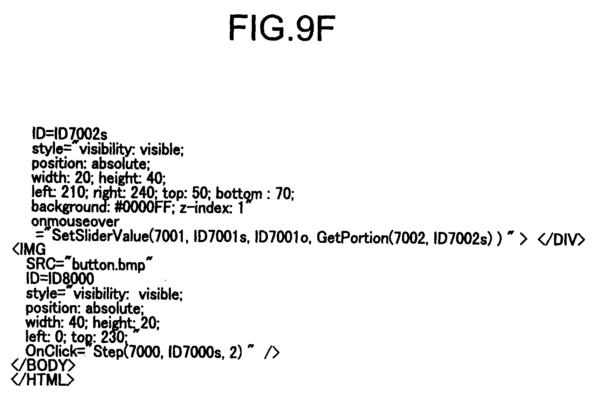

FIG. 8 shows an example of an MHEG-5 format document containing a slider object and actions associated with the slider object. FIGS. 9A through 9F show an example of an HTML 4.0 set format document containing the result generated by converting the MHEG-5 format document. This HTML 4.0 set document was successfully displayed on the browser. The sample contains a bitmap object. Because, for an object such as a Bitmap object in which there is a one-to-one correspondence between MHEG-5 and HTML 4.0 set, there is also a one-to-one correspondence in attribute values and therefore they were converted directly.

The MHEG-5 document in FIG. 8, when executed, displays three horizontally arranged sliders. The type of the left-end slider is Normal, the type of the middle slider is Thermometer, and the type of the right-end slider is Proportional. Also coded in the document is the bitmap of the button arranged below the left-end slider. Link100 contains coding that causes the left-end slider to step-move when a UserInput event occurs in the bitmap. Link110 contains coding that causes the value of the middle slider to be set in Portion of the indicator of the right-end slider when a CursorEnter event occurs in the middle slider. Link120 contains coding that causes the value of Portion of the indicator of the left-end slider to be set in the middle slider when a CursorEnter event occurs in the right-end slider.

In the HTML 4.0 set document in FIGs. 9A through 9F, StepSize, Orientation, SliderType, and Point are managed using arrays. Step, SetSliderValue, GetSliderValue, SetPortion, and GetPortion, which are methods coded in JavaScript, correspond to the methods of the link effect elements in the MHEG-5 document. In those methods, the sliders are also managed using arrays.

The DIV tags ID=ID7000o and ID=ID7000s correspond to Slider7000 in the MHEG-5 document. ID=ID7000o indicates the box, and ID=ID7000s indicates the indicator of the slider. Similarly, the DIV tags ID=ID7001o and ID=ID7001s correspond to Slider7001 in the MHEG-5 document. ID=ID7001o indicates the box, and ID=ID7001s indicates the indicator of the slider. In addition, the DIV tags ID=ID7002o and ID=ID7002s correspond to Slider7002 in the MHEG-5 document. ID=ID7002o indicates the box, and ID=ID7002s indicates the indicator of the slider.

The OnMouseOver event handler under the DIV tag of ID=ID7001s is associated with a combination of methods SetPortion and GetPortion. The DIV tag of ID=ID7001s corresponds to EventSource in LINK110 in the MHEG-5 document. OnMouseOver corresponds to CursorEnter that is the event type of LINK110 in the MHEG-5 document. The methods SetPortion and GetPortion correspond to LinkEffect in LINK110 in the MHEG-5 document.

The OnMouseOver event handler under the DIV tag of ID=ID7002s is associated with a combination of methods SetSlidervalue and GetPortion. The DIV tag of ID=ID7002s corresponds to EventSource in LINK120 in the MHEG-5 document. OnMouseOver corresponds to CursorEnter that is the event type of LINK120 in the MHEG-5 document. The methods SetSliderValue and GetPortion correspond to LinkEffect in LINK120 in the MHEG-5 document.

The OnClick event handler under the IMG tag of SRC="button.bmp" is associated with the method named Step. The IMG tag of SRC="button.bmp" corresponds to EventSource in LINK100 in the MHEG-5 document. OnClick corresponds to EventType of LINK100 in the MHEG-5 document. The method Step corresponds to LinkEffect in LINK100 in the MHEG-5 document.

In the description of FIGS. 9A through 9F shown above, the OnMouseOver event handler is inserted into the DIV tag section with ID=70001s, the OnMouseOver event handler into the DIV tag section with ID=7002s, and the OnClick event handler into the section with 〈IMG SRC="button.bmp..../〉. An event handler may be inserted not only into the DIV tag section and the IMG tag section but also into the OBJECT section or other tag sections. The browser generates HTML objects based on these tag sections.

In the above embodiment, the shape of the slider object is converted to two DIV tag sections. However, when the type of the slider object is Normal, the shape of the slider object may be converted to three tag sections: the DIV tag section corresponding to the indicator, the DIV tag section corresponding to a part from one end of the box to the indicator, and the DIV tag section corresponding to a part from the other end of the box to the indicator. And, the STEP method may be associated with the OnClick event handler of the latter two.

In the above embodiment, a plurality of HTML 4.0 set objects are generated from one slider object. However, one HTML 4.0 set object may be generated from an object in the MHEG-5 document depending upon the type of object in the MHEG document.

Next, a second embodiment of the present invention will be described in detail below.

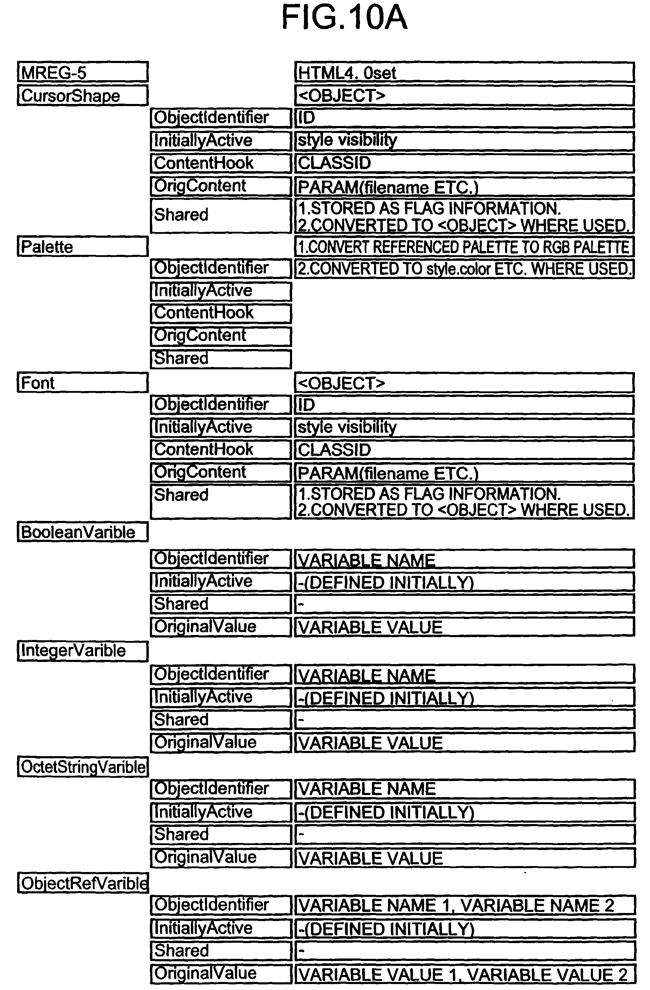

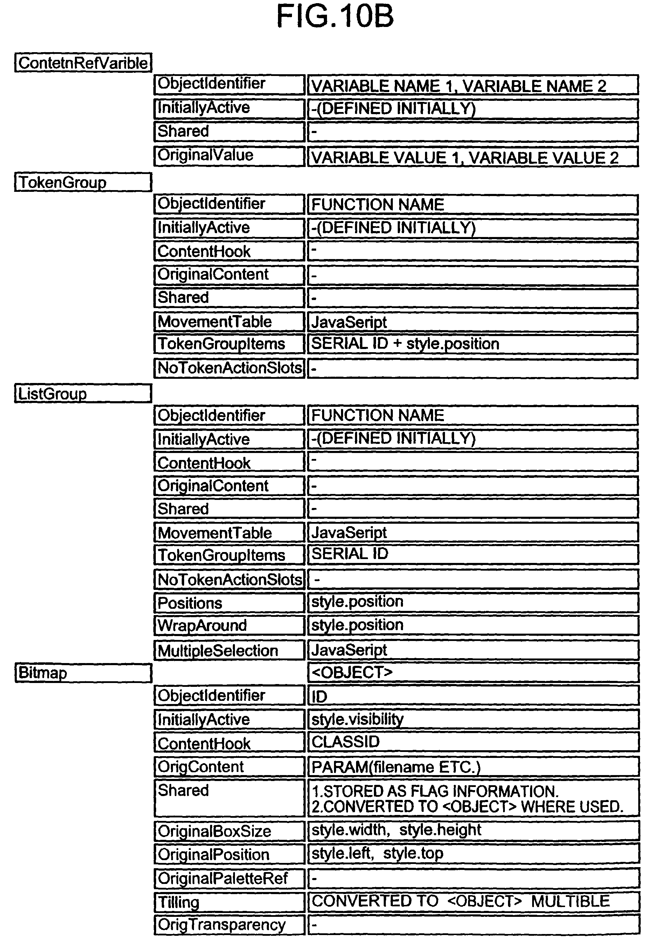

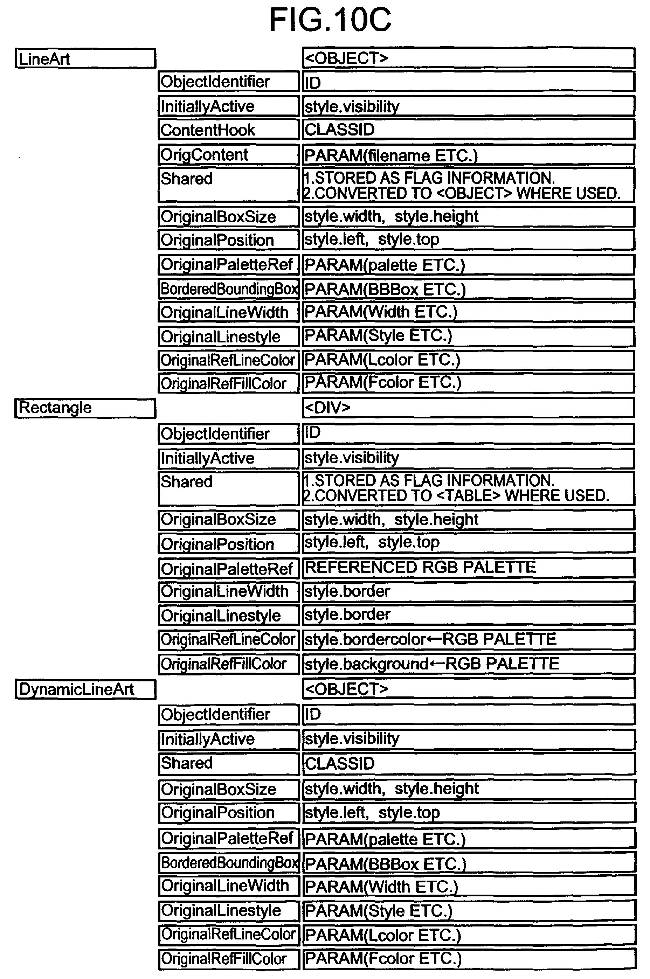

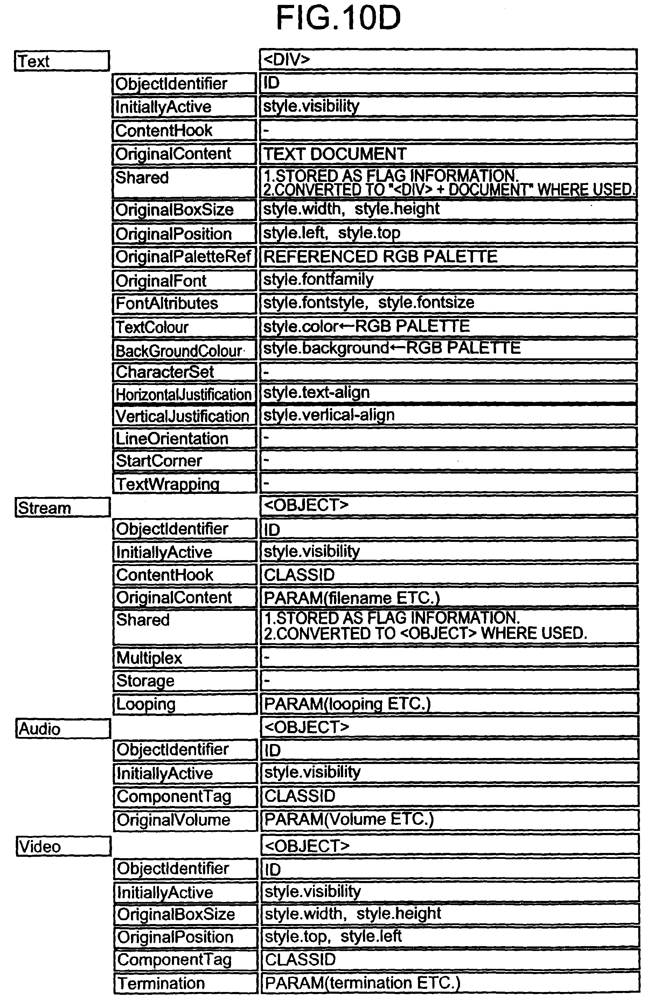

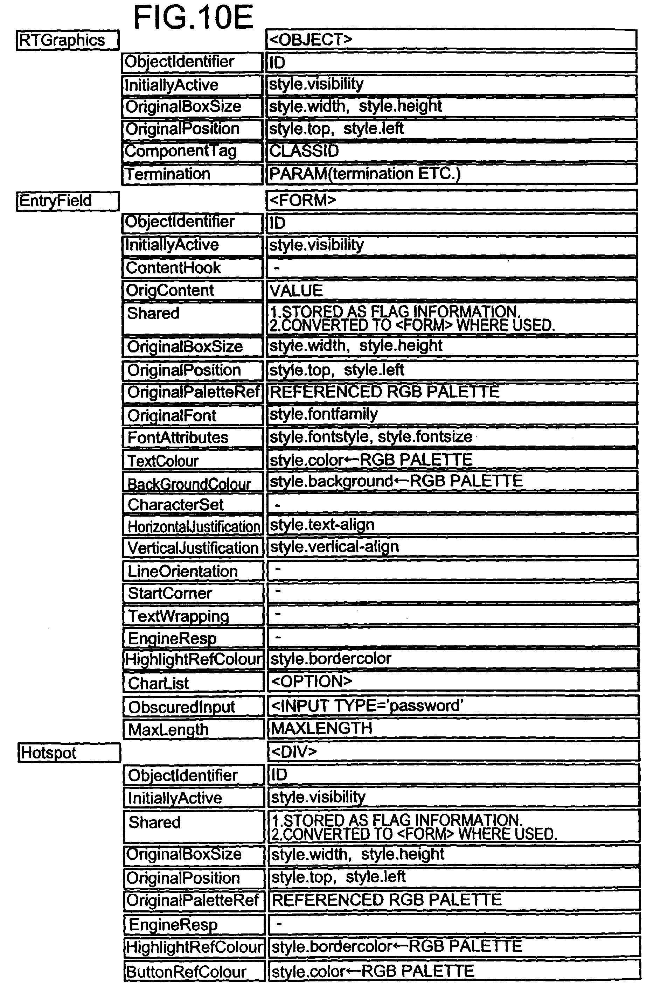

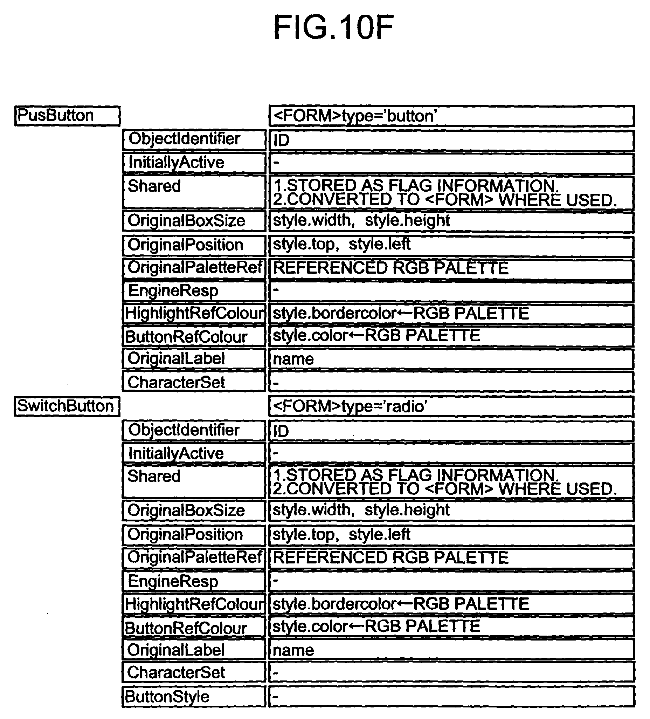

In FIGs. 10A to 10F, the leftmost column contains MHEG objects, the middle column contains MHEG object properties, and the rightmost column contains the generated HTML 4.0 set representations.

The CursorShape object is converted to coding surrounded by the 〈OBJECT〉 tags or to the CSS attribute. When the CursorShape object is converted to coding surrounded by the 〈OBJECT〉 tags, ObjectIdentifier is converted to ID. InitiallyActive is converted to the style attribute "visibility". ContentHook is converted to CLASSID of the script. OrigContent is converted to the PARAM tag. The parameters of the PARAM tag, such as filename, are the filenames of bitmaps representing the cursor shape. "Shared", which is stored as the flag information during conversion, is converted to coding surrounded by the 〈OBJECT〉 tags where used.

The Palette object cannot be converted to an object in the HTML 4.0 set document. It is converted to style.color that is the style attribute of each related object.

The Font object is converted in the same way CursorShape is converted.

The BooleanVariable object, IntegerVariable object, OctetStringVariable object, ObjectRefVariable object, and ContentRefVariable object are variable objects. The ObjectIdentifier of each object is converted to a script variable(s), and OriginalValue is converted to the value(s) of the variable(s).

A serial ID is assigned to the object in the HTML 4.0 set document corresponding to the object in TokenGroupItems in the TokenGroup object. MovementTable in that object is converted to a method coded in a script using SetFocus. ObjectIdentifier, which is the name of the TokenGroup object, is assigned to the method. The same conversion is performed for ListGroup.

OriginPaletteRef,BorderedBoundingBox, OriginalLineWidth, OriginalLineStyle, OriginalRefLineColor, and OriginalRefFillColor of the DynamicLineArt object are converted to plug-in objects. The parameters in the parentheses immediately following PARAM are parameters passed between the HTML document and the plug-in object.

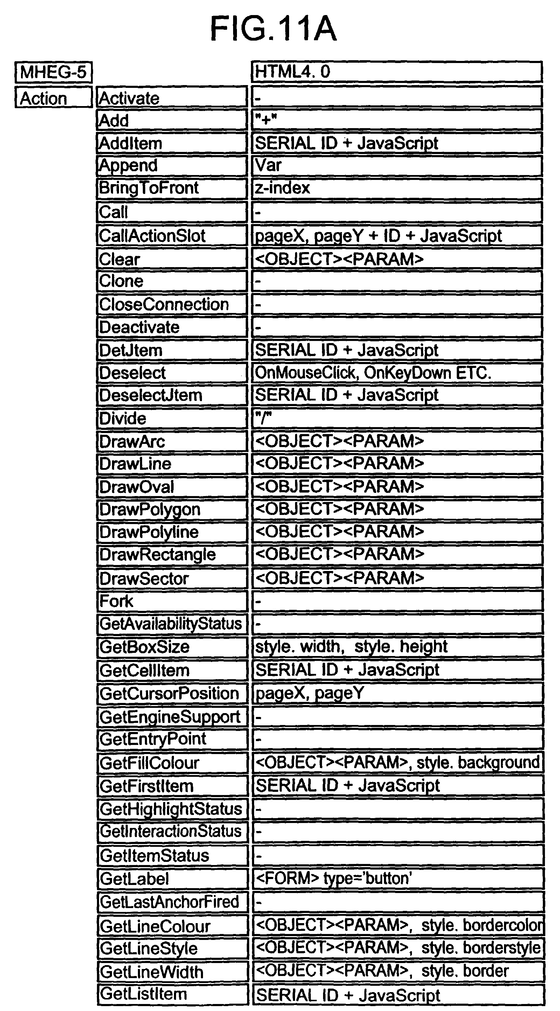

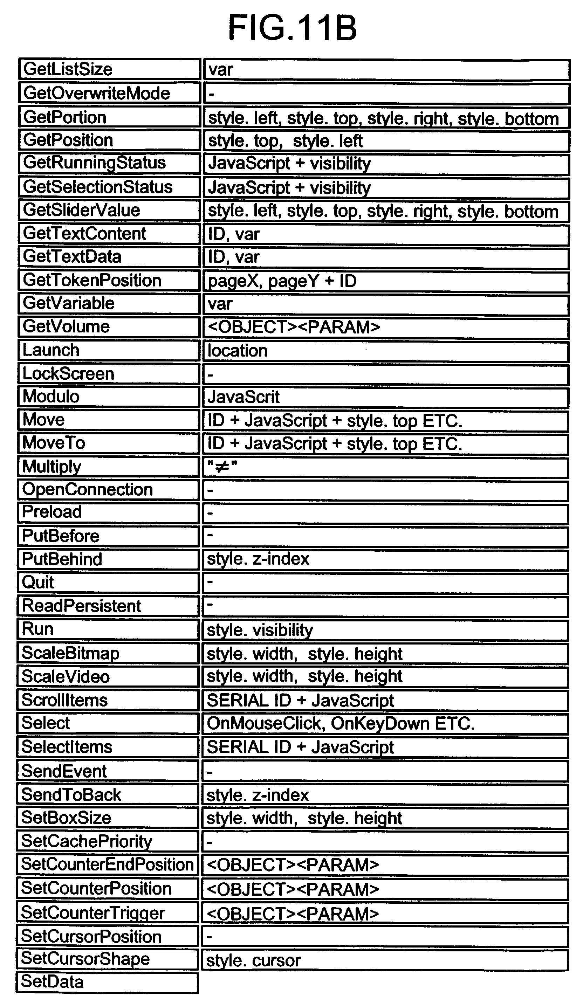

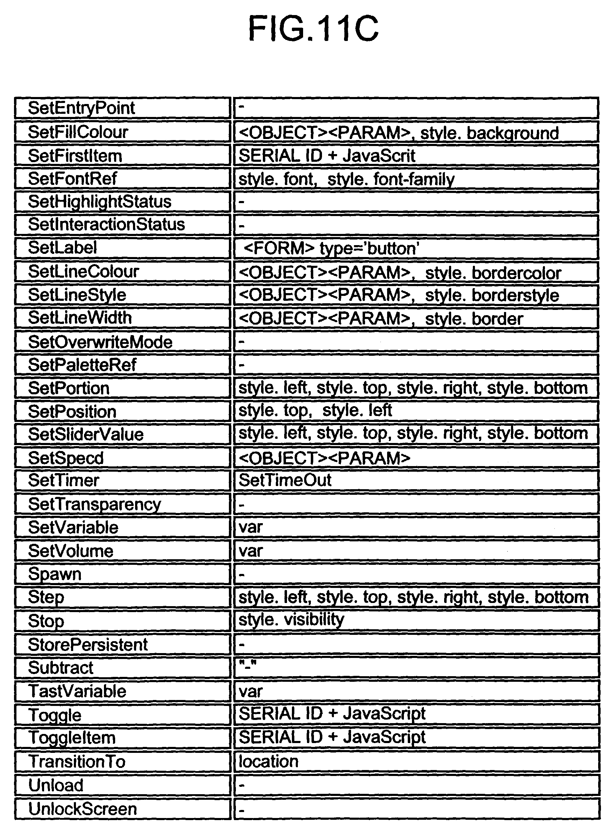

FIGS. 11A through 11C are diagrams showing an MHEG action conversion table used in the second embodiment according to the present invention. An action is used in the link effect of a link object.

The serial ID corresponding to the AddItem action is a tag. AddItem is coded in the script.

Deselect is converted to a script associated with the event handler such as OnMouseClick and OnKeyDown. The types of the event handler and the script depend on the object.

DrawArc is coded in a plug-in object. 〈OBJECT〉 specifies the type of the plug-in object, and 〈PARAM〉 specifies information to be exchanged with the plug-in object.

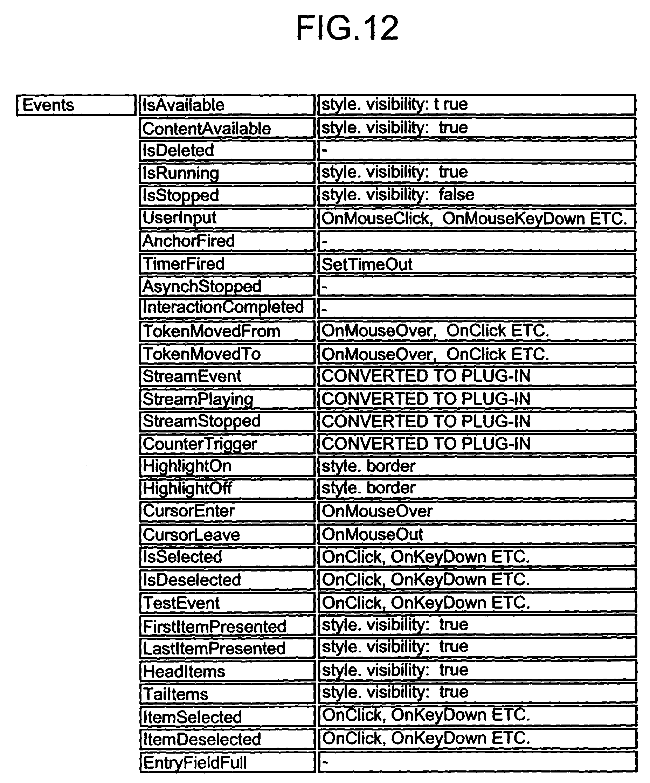

FIG. 12 is a diagram showing an MHEG event conversion table used in the second embodiment according to the present invention. An event is used for the event type of a link object.

In the first and second embodiments described above, JavaScript-coded variables and methods are embedded in the HTML document. They may also be written into a file separate from the HTML document for a later call from the HTML document.

In the first and second embodiments described above, JavaScript is used as the script language. Other script languages such as VBScript or Tcl may also be used as the script language.

The method in the above embodiments may also be implemented by allowing the CPU to read the program, which causes the CPU to execute the method, from recording media such as a CD-ROM.

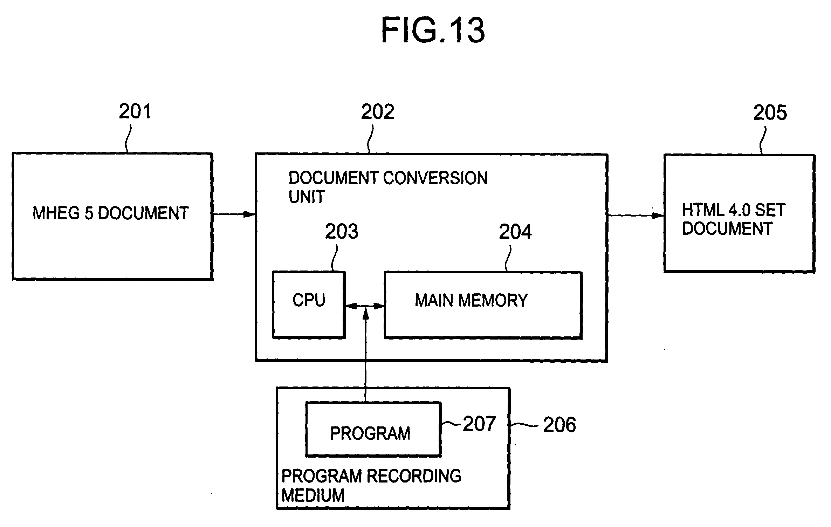

The method in the above embodiments may also be implemented by allowing a CPU 203 to read a program 207, which causes the CPU 203 to execute the method, from a program recording medium 206 such as a CD-ROM storing thereon the program 207, as shown in FIG. 13. In this case, the CPU 203 usually transfers the program 207 from the program recording medium 206 into a main memory 204 via the operating system and then reads the program from the main memory 204 for execution. The computer, which comprises the CPU and the main memory 204, functions as a document conversion unit 202. It reads an MHEG-5 document 201, converts the document into an HTML 4.0 set document 205, and then outputs it.

The above program sometimes comprises a text file containing interpreter commands and an interpreter reading this file for conversion to executable instructions.

As described above, the method according to the present invention can convert an MHEG object, which cannot be converted as a part, during conversion from an MHEG document to an HTML document.

While this invention has been described in conjunction with the preferred embodiments described above, it will now be possible for those skilled in the art to put this invention into practice in various other manners.

## Claims

1. A method for converting an MHEG(Multimedia and Hypermedia Expert Group) document to an HTML (Hypertext Mark-up Language) document, comprising:
converting the MHEG document having one or more MHEG objects to the HTML document having one or more object descriptions, CSS(Cascading Style Sheet) descriptions, and scripts.

2. The method as claimed in claim 1, wherein said HTML document does not have the counterpart of said MHEG document.

3. The method as claimed in claim 1, wherein said HTML document object includes plug-in objects.

4. A method for converting an MHEG(Multimedia and Hypermedia Expert Group) document to an HTML (Hypertext Mark-up Language) document, comprising:
converting at least a part of properties of a first MHEG object in said MHEG document to one or more object properties in said HTML document;
converting at least a part of properties of said first MHEG object, other than the properties converted to the properties in said HTML document, to variables coded in a script in the HTML document;
converting an event type of a link object having a second MHEG object as an event source to an event handler associated with an object in the HTML document, said object in the HTML document corresponding to said event source in the link object; and
converting a link effect of said link object having said second MHEG object as the event source to a method or a combination of methods associated with said event handler and coded in said script.

5. The method as claimed in claim 4, wherein the properties converted to the properties in said HTML document include at least a part of shape properties in said first MHEG object.

6. The method as claimed in claim 4, wherein said method or said combination of methods processes the properties of the object in said HTML document, said properties being converted from the properties of said first MHEG object.

7. The method as claimed in claim 6, wherein said method or said combination of methods gets the properties of the object in said HTML document, said properties being converted from the properties of said first MHEG object.

8. The method as claimed in claim 6, wherein said method or said combination of methods changes the properties of the object in said HTML document, said properties being converted from the properties of said first MHEG object.

9. The method as claimed in claim 4, wherein the object having the properties converted from the properties of said first MHEG object comprises a pair of DIV tags and style attribute description statements surrounded by said pair of DIV tags.

10. The method as claimed in claim 4, wherein the objects in the HTML document are managed using an array in said script, said objects being converted from a plurality of MHEG objects of the same type.

11. The method as claimed in claim 4, wherein said script is JavaScript.

12. The method as claimed in claim 4, wherein said first MHEG object is a slider object.

13. The method as claimed in claim 4, further comprising the step of, when said first and second MHEG objects ate a palette object, converting the palette object in said MHEG document, not to the palette object, but to a color style attribute.

14. The method as claimed in claim 4, further comprising the step of, when said first and second MHEG objects are a variable object, converting the variable object in said MHEG document, not to the variable object, but to a script variable.

15. The method as claimed in claim 4, further comprising the step of converting at least a part of said first or second MHEG object or some other MHEG object to plug-in objects in the HTML document.

16. The method as claimed in claim 4, further comprising the step of converting at least a part of said first or second MHEG object or some other MHEG object to the scripts in the HTML document.

17. A system, which converts an MHEG(Multimedia and Hypermedia Expert Group) document to an HTML (Hypertext Mark-up Language) document, comprising:
a first element which stores information which relates a MHEG object with a HTML document having one or more object descriptions, CSS(Cascading Style Sheet) descriptions, and scripts; and
a second element which converts said MHEG objects to said HTML document having one or more object descriptions, CSS(Cascading Style Sheet)descriptions, and scripts based on said information.

18. The system as claimed in claim 17, wherein said HTML document does not have the counterpart of said MHEG document.

19. A computer-readable recording medium having stored therein a program which causes a computer to execute the method for converting an MHEG (Multimedia and Hypermedia Expert Group) document to an HTML (Hypertext Mark-up Language)document, said method comprising:
converting the MHEG document having one or more MHEG objects to the HTML document having one or more object descriptions, CSS(Cascading Style Sheet) descriptions, and scripts.

20. The computer-readable recording medium as claimed in claim 19, wherein said HTML document does not have the counterpart of said MHEG document.
